# EUROPÄISCHE PATENTSCHRIFT

(11) **EP 2 008 533 B1**
(45) Veröffentlichungstag und Bekanntmachung des Hinweises auf die Patenterteilung: **06.03.2013**
(21) Anmeldenummer: 08104513.0
(22) Anmeldetag: 24.06.2008
(51) Int. Cl.: A23L 1/31, A23L 1/317

(54) **Verfahren zur Herstellung von Formfleisch für die Zubereitung in einem Toaster, tiefgekühltes Formfleisch und Verwendung von tiefgekühltem Formfleisch zur Zubereitung eines Schnitzels in einem Toaster**
Method for producing reformed meat for preparation in a toaster, deep frozen reformed meat and use of deep-frozen reformed meat for preparing a cutlet in a toaster
Procédé de fabrication de viande d'assemblage à préparer dans un grille-pain, viande d'assemblage congelée et utilisation de viande d'assemblage congelée pour la préparation d'une escalope dans un grille-pain

(30) Priorität: 28.06.2007 DE 102007030104
(43) Veröffentlichungstag der Anmeldung: 31.12.2008
(60) Teilanmeldung: 12162448.0
(73) Patentinhaber: Tillman's Convenience GmbH, 06667 Weißenfels (DE)
(72) Erfinder: Beermann, Carsten, 48231 Warendorf (DE)
(74) Vertreter: Cohausz & Florack

(56) Entgegenhaltungen:
- EP-A1- 0 043 260
- WO-A1-93/15619
- WO-A1-2005/067720
- DE-A1- 19 624 329
- DE-A1-102005 012 436
- DE-U1-202005 013 402
- US-A- 4 913 917
- US-A1- 2003 044 510
- GOETSCH S J ET AL: "Shelf-life of raw and cooked fiber-formulated pork nuggets." JOURNAL OF SENSORY STUDIES, Bd. 5, Nr. 4, 1990, Seiten 241-249, XP002555747 DEP. OF ANIM. SCI. & IND., FOODS & NUTR., KANSAS STATE UNIV., MANHATTAN, KS 66506, USA

## Beschreibung

Die Erfindung betrifft ein Verfahren zur Herstellung von paniertem Formfleisch für die Zubereitung in einem herkömmlichen Toaster.

Allgemein bekannt sind tiefgekühlte, panierte Schinken-Schnitzel, die durch Erhitzen in einem Backofen oder einer Bratpfanne essfertig zubereitet werden können.

Aus der WO 2005/067720 A1 ist eine Panade bekannt, die aus einem kleinen Anteil Alkenyl-Succinat-Speisestärke (ca. 0,5 - 10 Gew.-%) und einem größeren Anteil gebleichter und/oder oxidierter Speisestärke (ca. 20 - 98 Gew.-%) zusammengesetzt und dadurch gut an dem zu panierenden Produkt haftet. Bei dem zu panierenden Produkt kann es sich um ein Fleisch-, Fisch-, Kartoffel-, Käse-, Gemüse-, Fruchtprodukt oder um ein Produkt speziell für Vegetarier handeln.

Die DE 196 24 329 A1 offenbart ein paniertes Fisch- oder Fleischprodukt, das in einem Mikrowellenofen erhitzt werden kann und dabei knusprig bleibt. Der Fisch oder das Fleisch wird dabei zerkleinert und mit Additiven (Fremdeiweißen und Hydrokolloiden) vermischt. Daraufhin wird die Mischung gekühlt, geformt, nass- und trockenpaniert, gegart und bei hohen Temperaturen kurz erhitzt.

In der WO 93/15619 A1 ist eine Verfahren zur Herstellung von panierten Nahrungsprodukten beschrieben. Das Nahrungsprodukt (z. B. Fleisch, Geflügel, Meeresfrüchte, Käse, Gemüse oder Früchte) muss dabei einen Feuchtigkeitsgehalt von mehr als 35 Gew.-% haben. Das zu panierende Nahrungsprodukt wird dann zunächst mit einer herkömmlichen Panade und daraufhin mit einem filmbildenden, wasserabweisenden Protein oder einer Proteinmischung überzogen und abschließend erhitzt.

Die Veröffentlichung "SHELF-LIFE OF RAW AND COOKED FIBER-FORMULATED PORK NUGGETS" von S. J. Goetsch et. al. offenbart Formfleischteile mit einer Panade. Die Fleischmischung besteht aus 94 % Schweinehackfleisch, 5 % Ballaststoffen und 1 % Salz. Nachdem die Fleischmischung in eine Nugget-Form gebracht worden ist, wird sie mit einer herkömmlichen Panade paniert.

In der DE 20 2005 013 402 U1 ist ein in Form eines Krokodils geformtes Lebensmittel mit einer äußeren Hülle und einer Füllung beschrieben. Die äußere Hülle besteht dabei aus einer brotteigartigen Panade. Bei der Füllung kann es sich um Fleisch-, Fisch- und/oder Gemüsebestandteile handeln.

Die EP 0 043 260 A1 offenbart ein Verfahren zur Herstellung von kochbaren Fleischprodukten. Die danach hergestellten Fleischprodukte bestehen aus Geflügelfleisch mit einer Ummantelung von ofenbeständiger Panade.

In der US 4,913,917 A ist ein Verfahren zur Herstellung von Formfleischprodukten beschrieben, bei dem zunächst ein Stück Fleisch zugeschnitten wird. Daraufhin wird das Fleischstück weich geklopft und mit einer Panade-Mischung überzogen. Anschließend wird die Form des Fleischstückes unter Druck angepasst und fixiert.

Die US 2003/0044510 A1 offenbart ein Verfahren zur Herstellung von Fleischbratlingen aus Schweine- oder Rinderhackfleisch. Das Fleisch wird dabei mit anderen Zutaten (z. B. Brot, Brötchen, Wasser, Gewürze, usw.) gemischt und in eine Form gebracht. Anschließend wird der Bratling von allen Seiten mit einer herkömmlichen Panade überzogen.

In der DE 10 2005 012 436 A1 ist ein Verfahren zur Herstellung eines zusammengefügten Fleischproduktes aus geschnittenem und teilweise gewolftem Fleisch beschrieben. Dem bekannten Verfahren liegt die Aufgabe zugrunde, die bei bisher bekannten zusammengefügten Fleischprodukten auftretende Fleischtextur zu verbessern, d. h. an die Textur der ursprünglichen Fleischausgangsmaterialien vor der Zerkleinerung anzupassen. Das Verfahren umfasst folgende Schritte: a) Reifen des Fleischausgangsmaterials unter Vakuum; b) Chargenweise Bereitstellung von Fleischausgangsmaterial, welches aus spezifizierten Teilstücken besteht; c) Zerkleinern des Ausgangsmaterials in einen Grob- und einen Feinanteil, d) Vermischen der Fleischanteile mit einer Würzzusammensetzung und Tumbeln der Mischung; e) Abkühlen der Mischung auf Formtemperatur; und f) Formen der Mischung zu einem Fleischprodukt, wobei beim Tumbeln gekühlt wird, und wobei das so gewonnene Fleischprodukt durch Marinieren, Panieren, Garen, Frittieren, Kühlen oder Gefrieren weiterverarbeitet werden kann.

Der vorliegenden Erfindung liegt die Aufgabe zugrunde, ein Verfahren zur Herstellung von paniertem Formfleisch für eine Zubereitung in herkömmlichen Toastern anzugeben bzw. ein für die Zubereitung in einem herkömmlichen Toaster geeignetes Formfleischprodukt zur Verfügung zu stellen.

Diese Aufgabe wird durch das Verfahren mit den Merkmalen des Anspruchs 1 gelöst.

Das erfindungsgemäße Verfahren umfasst im Wesentlichen folgende Schritte:
Formen von im Wesentlichen scheibenförmigen Formfleischstücken aus einer Fleischstücke, vorzugsweise Schinkenfleischstücke enthaltenden Formmasse, so dass das jeweilige Formfleischstück eine mittlere Dicke im Bereich von 5 mm bis 22 mm und eine Breite oder einen Durchmesser im Bereich von 50 mm bis 160 mm aufweist,
Nasspanieren der Formfleischstücke mit einer aus zerkleinerten fleischlichen Rohstoffen, Trinkwasser und Hilfsstoffen erzeugten Nasspanade, so dass das jeweilige Formfleischstück vollflächig oder im Wesentlichen vollflächig mit der Nasspanade versehen ist,
Trockenpanieren der nasspanierten Formfleischstücke, so dass das jeweilige nasspanierte Formfleischstück vollflächig mit einer Trockenpanade beschichtet ist,
Frittieren der trockenpanierten Formfleischstücke,
Abtrennen von überschüssigem Frittierfett von den frittierten Formfleischstücken, so dass die Formfleischstücke einen Frittierfettgehalt von weniger als 12 Gew.-% aufweisen, und
Tiefkühlen der frittierten und von überschüssigem Frittierfett befreiten Formfleischstücke.

Die so hergestellten Formfleischstücke (Formfleischprodukte) weisen einen erheblich reduzierten Frittierfettgehalt auf, so dass sie in herkömmlichen Toastern ohne problematische Fettverschmutzung des Toasters in relativ kurzer Garzeit, vorzugsweise ein Toasterintervall, essfertig zubereitet werden können. Die frittierten Formfleischstücke werden soweit von Frittierfett befreit, dass beim Erhitzen der Formfleischstücke im Toaster kein oder so gut wie kein Frittierfett in den Toaster tropft.

Unter herkömmlichen Toastern werden in diesem Kontext allgemein im Handel erhältliche Toaster verstanden, die eine so genannte Krümelschublade enthalten können, aber ansonsten keine speziellen Reinigungsfunktionen, wie etwa ohne Werkzeug herausnehmbare, abwaschbare Reflektorbleche aufweisen.

In einer bevorzugten Ausgestaltung des erfindungsgemäßen Verfahrens wird überschüssiges Frittierfett von den frittierten Formfleischstücken durch düsengesteuertes Abblasen mittels Luftströmung abgetrennt. Diese Art der Abtrennung von Frittierfett hat sich in Versuchen als sehr effektiv und zuverlässig erwiesen.

Eine weitere bevorzugte Ausgestaltung des erfindungsgemäßen Verfahrens sieht vor, dass vor dem Trockenpanieren überschüssige Nasspanade von den nasspanierten Formfleischstücken und/oder vor dem Frittieren überschüssige Trockenpanade von den panierten Formfleischstücken abgetrennt wird. Auf diese Weise wird erreicht, dass die Panade des zubereitungsfertigen Formfleischstückes besonders dünn ist und das Formfleischstück bzw. die Panade beim anschließenden Garungsprozess (Frittieren) keine Blasen an der Oberfläche bildet. Damit wird sichergestellt, dass das panierte und frittierte Formfleischstück an allen Stellen einen im Wesentlichen gleichmäßigen Durchmesser aufweist und ein Ablösen von Bestandteilen der Panade vom frittierten Formfleischstück praktisch völlig ausgeschlossen ist.

Die abgetrennte überschüssige Nasspanade und/oder Trockenpanade kann zum Panieren nachfolgender Formfleischstücke verwendet werden, so dass sich ein relativ geringer Verbrauch an Nasspanade bzw. Trockenpanade bei der Herstellung der panierten Formfleischstücke erzielen lässt.

Die Panade macht vorzugsweise weniger als 25 Gew.-%, insbesondere weniger als 20 Gew.-% des jeweiligen Formfleischstücks aus.

Auch das Abtrennen von überschüssiger Nasspanade und/oder überschüssiger Trockenpanade wird gemäß einer vorteilhaften Ausgestaltung des erfindungsgemäßen Verfahrens vorzugsweise durch Abblasen mittels Luftströmung durchgeführt.

Zur Erzielung von Formfleisch mit gutem Scheibenzusammenhalt sowie guter Schneidbarkeit ist ferner vorgesehen, dass die verwendeten Fleischstücke zerkleinert und vor dem Formen der Formfleischstücke getumbelt werden. Des Weiteren ist vorgesehen, dass die Fleischstücke während des Tumbelns gekühlt und anschließend mechanisch nachzerkleinert werden. Die Kühlung der Fleischstücke erfolgt vorzugsweise mittels CO₂-Gas. CO₂-Gas ist geruchs- und geschmacksneutral. Sodann werden aus den nachzerkleinerten Fleischstücken Formfleischstücke geformt, die vorzugsweise entsprechend einer Toastbrotscheibe ein im Wesentlichen rechteckiges oder quadratisches Scheibenformat aufweisen.

Weitere bevorzugte und vorteilhafte Ausgestaltungen des erfindungsgemäßen Verfahrens sind in den Unteransprüchen angegeben.

Nachfolgend wird die Erfindung unter Bezugnahme auf die beiliegende Zeichnung anhand von Ausführungsbeispielen näher erläutert. Es zeigen:

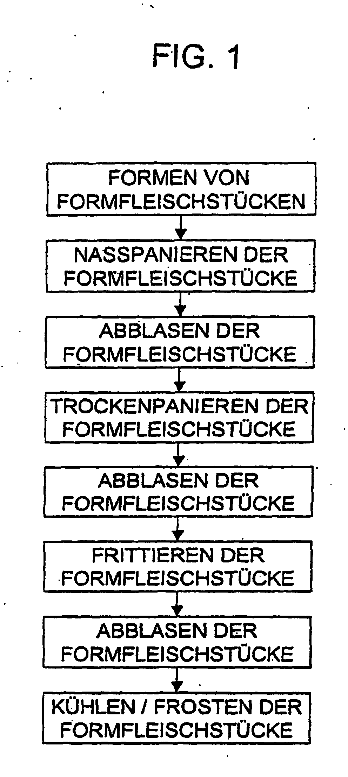

- Fig. 1: verschiedene Schritte des erfindungsgemäßen Verfahrens zur Herstellung eines panierten, frittierten Formfleischstückes für die Zubereitung in einem herkömmlichen Toaster;
- Fig. 2: verschiedene Schritte zur Herstellung einer Formmasse aus Fleischstücken für die Herstellung eines panierten, frittierten Formfleischstückes zur Zubereitung in einem herkömmlichen Toaster;
- Fig. 3: verschiedene Schritte zur Herstellung einer Nasspanade für ein paniertes, frittiertes Formfleischstück zur Zubereitung in einem herkömmlichen Toaster;
- Fig. 4: ein einfindungsgemäßes Formfleischprodukt zur Zubereitung in einem herkömmlichen Toaster, in perspektivischer Ansicht;
- Fig. 5: eine Schnittansicht eines schematisch dargestellten, einfindungsgemäßen Formfleischproduktes;
- Figuren 6 und 7: weitere Ausführungsbeispiele von einfindungsgemäßen Formfleischprodukten, die unterschiedliche Formate aufweisen, in perspektivischer Ansicht; und
- Fig. 8: ein weiteres Ausführungsbeispiel eines einfindungsgemäßen Formfleischproduktes, in Draufsicht.

Die erfindungsgemäßen Formfleischprodukte können wie folgt hergestellt werden.

Zunächst wird eine Formmasse aus Schinkenfleisch hergestellt. Hierzu wird geeignetes Schinkenfleisch zerkleinert. Die Stückgrößen der zerkleinerten Schinkenfleischstücke liegen im Bereich von 2 mm bis 12 mm, vorzugsweise im Bereich von 4 mm bis 12 mm. Die zerkleinerten Schinkenfleischstücke werden dann in einem so genannten Tumbler unter Zugabe von Gewürzkomponenten veredelt. Durch das Tumbeln wird eine gleichmäßige, d.h. im Wesentlichen homogene Fleischmasse erzielt. Insbesondere wird durch das Tumbeln das Wasserbindungsvermögen der Fleischstücke verbessert. Durch diesen Prozess und die bevorzugte Maßnahme, dass bei der Herstellung des erfindungsgemäßen Formfleischprodukts keine Flüssiggewürze verwendet werden, ist im fertig gegarten Endprodukt kein Fremdwasseranteil nachweisbar.

Ferner werden die zerkleinerten Fleischstücke während des Tumbelns oder im Anschluss dran gekühlt. Die Kühlung erfolgt vorzugsweise im Tumbler mittels N₂-Gas, CO₂-Gas oder CO₂-Schnee auf eine Temperatur im Bereich von -1°C bis -5°C, beispielsweise ca. -3°C.

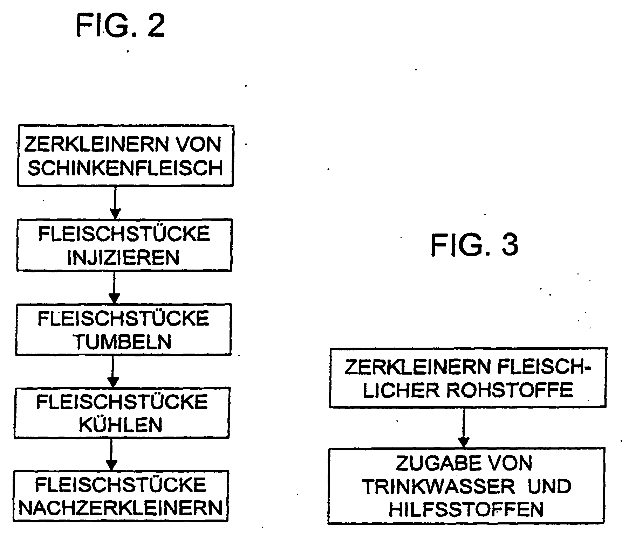

Anschließend werden die zerkleinerten, getumbelten und gekühlten Fleischstücke mechanisch nachzerkleinert. Die Nachzerkleinerung wird vorzugsweise mittels eines Kutters durchgeführt. Auf diese Weise wird eine Formmasse aus zusammengefügten Schinkenfleischstücken erhalten (vgl. Fig. 2).

Des Weiteren wird auf der Basis fleischlicher Rohstoffe eine Nasspanade hergestellt. Hierzu werden geeignete fleischliche Rohstoffe zerkleinert. Die fleischlichen Rohstoffe werden soweit zerkleinert werden, dass sie in flüssiger Konsistenz in der Nasspanade vorliegen. Die Nasspanade basiert auf tierischem Eiweiß und ist im Wesentlichen stärkefrei. Während der Zerkleinerung der fleischlichen Rohstoffe und/oder im Anschluss daran werden Trinkwasser und Hilfsstoffe zugegeben. Als Hilfsstoffe für die Herstellung der Nasspanade werden vorzugsweise Kochsalz, Laktat und/oder Phosphat verwendet (vgl. Fig. 3).

Aus einer Schinkenfleischstücke enthaltenden Formmasse, die gemäß den in Fig. 2 angegebenen Verfahrensschritten hergestellt werden kann, werden unter Verwendung eines Formwerkzeuges scheibenförmige Formfleischstücke geformt. Die scheibenförmigen Formfleischstücke werden so geformt, dass das jeweilige Formfleischstück eine mittlere Dicke im Bereich von 5 mm bis 22 mm und eine Breite oder einen Durchmesser im Bereich von 50 mm bis 160 mm aufweist.

Die scheibenförmigen Formfleischstücke werden zunächst mit einer Nasspanade, die wie oben mit Bezug auf Fig. 3 beschrieben hergestellt werden kann, paniert und anschließend trockenpaniert. Das jeweilige Formfleischstück wird dabei vollflächig oder im Wesentlichen vollflächig mit der Nasspanade versehen.

Vor dem Trockenpanieren wird überschüssige Nasspanade von den Formfleischstücken abgetrennt. Die Abtrennung von überschüssiger Nasspanade erfolgt vorzugsweise durch Abblasen der nasspanierten Formfleischstücke. Nach dem Abtrennen von überschüssiger Nasspanade wird das jeweilige Formfleischstück mit einer Trockenpanade beschichtet, die auf einer Weizenmehlbasis basiert. Zudem enthält die Trockenpanade vorzugsweise Salz, Hefe und/oder andere Gewürze. Die Trockenpanade wird so aufgebracht, dass das jeweilige nasspanierte Formfleischstück vollflächig mit der Trockenpanade beschichtet ist.

Nach der Beschichtung mit Trockenpanade werden die Formfleischstücke frittiert. Vor dem Frittieren werden die Formfleischstücke allerdings nochmals abgeblasen, um überschüssige Trockenpanade abzutrennen.

Die frittierten Formfleischstücke werden anschließend einer Abblasvorrichtung zugeführt, in der mittels Druckluft überschüssiges Frittierfett von den Formfleischstücke abgeblasen wird. Die Abblasvorrichtung weist hierzu mehrere Flachdüsen auf, die überschüssiges Frittierfett schonend von den Panade abtrennen.

Durch das Abblasen wird erreicht, dass der Frittierfettgehalt der zubereitungsfertigen Formfleischstücke weniger als 12 Gew.-% beträgt.

Nach einer besonders bevorzugten Ausgestaltung des erfindungsgemäßen Verfahren ist vorgesehen, dass die Fleischstücke für die Formmasse so ausgewählt und die Nass- und/oder die Trockenpanade so zubereitet werden, dass die frittierten und von überschüssigem Frittierfett befreiten Formfleischstücke einen Fettgehalt von weniger als 11 Gew.-% aufweisen.

Schließlich werden die frittierten und von überschüssigem Frittierfett befreiten Formfleischstücke tiefgekühlt oder gefrostet und verpackt.

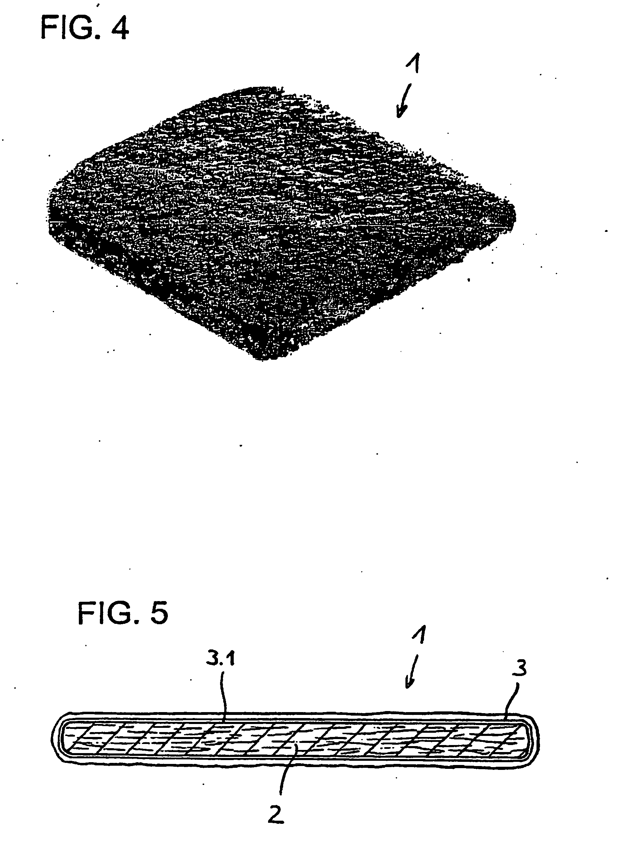

Fig. 5 zeigt eine Schnittansicht eines einfindungsgemäßen Formfleischproduktes 1. Mit 2 ist das aus Schinkenfleischstücken hergestellte Formfleischstück bezeichnet, das ein im Wesentlichen rechteckiges, quadratisches oder polygonales Scheibenformat mit einer mittleren Dicke im Bereich von 8 mm bis 22 mm und einer Breite oder einem Durchmesser im Bereich von 50 mm bis 160 mm aufweist. Das Formfleischstück 2 ist vollflächig mit einer mehrschichtigen Panade 3 umhüllt. Die erste unmittelbar auf das Formfleischstück 2 aufgebrachte Schicht 3.1 ist aus einer aus zerkleinerten fleischlichen Rohstoffen, Trinkwasser und Hilfsstoffen erzeugten Nasspanade gebildet. Darauf ist als zweite Schicht 3.2 eine Trockenpanade aufgebracht, die - wie bereits erwähnt - auf einer Weizenmehlbasis basiert und ergänzend Salz, Hefe und/oder mindestens ein Gewürz enthalten kann. Die Nasspanade ist frei von Aromastoffen, Extrakten und Geschmacksverstärkern. Sie enthält weder Stärke- noch Mehlkomponenten.

Die Schichtdicke der zweischichtigen Panade 3 liegt im Bereich von 2 mm bis 6 mm.

Da die fleischlichen Rohstoffe für die Nasspanade 3.1 soweit zerkleinert wurden, dass sie in flüssiger Konsistenz in der Nasspanade vorliegen, und die Nasspanade 3.1 im Wesentlichen stärkefrei ist, besitzt das frittierte, zubereitungsfertige Formfleischprodukt 1 im Ergebnis eine Panade 3 mit besonders gleichmäßiger Schichtdicke auf, die blasenfrei oder im Wesentlichen blasenfrei mit zuverlässiger Anbindung an dem Formfleischstück 2 haftet. Hierdurch wird sichergestellt, dass es beim Zubereiten des erfindungsgemäßen Formfleischprodukts 1 in einem herkömmlichen Toaster im Wesentlichen zu keiner Ablösung der Panade 3 vom Formfleischstück 2 kommt bzw. eine kritische Blasenbildung zwischen Panade 3 und dem Formfleischstück 2 verhindert wird.

Die erfindungsgemäßen Formfleischprodukte 1 enthalten weder künstliche Konservierungsstoffe noch Farbstoffe noch künstliche Geschmacksverstärker.

Die zubereitungsfertigen Formfleischstücke 2 haben durch die Panade 3 eine goldbraune Farbe. Wie oben erwähnt, werden aus der Schinkenfleisch-Formmasse im Wesentlichen rechteckige, scheibenförmige Formfleischstücke 2 zur Zubereitung in herkömmlichen Toastern geformt. Die Formate der erfindungsgemäßen panierten Formfleischprodukte können beispielsweise ca. 8 x 8 cm, 9 x 9 cm, 10 x 10 cm, 11 x 11 cm oder 9 x 11,5 cm betragen. Die Ecken der scheibenförmige Formfleischstücke sind dabei vorzugsweise etwas abgerundet, wobei zwei benachbarte Ecken stärker abgerundet sind als die beiden übrigen Ecken. Das in Fig. 4 dargestellte erfindungsgemäße Formfleischprodukt 1 besitzt im Wesentlichen das Format einer klassischen Toastbrotscheibe. Seine mittlere Dicke liegt im Bereich von ca. 10 mm bis 22 mm.

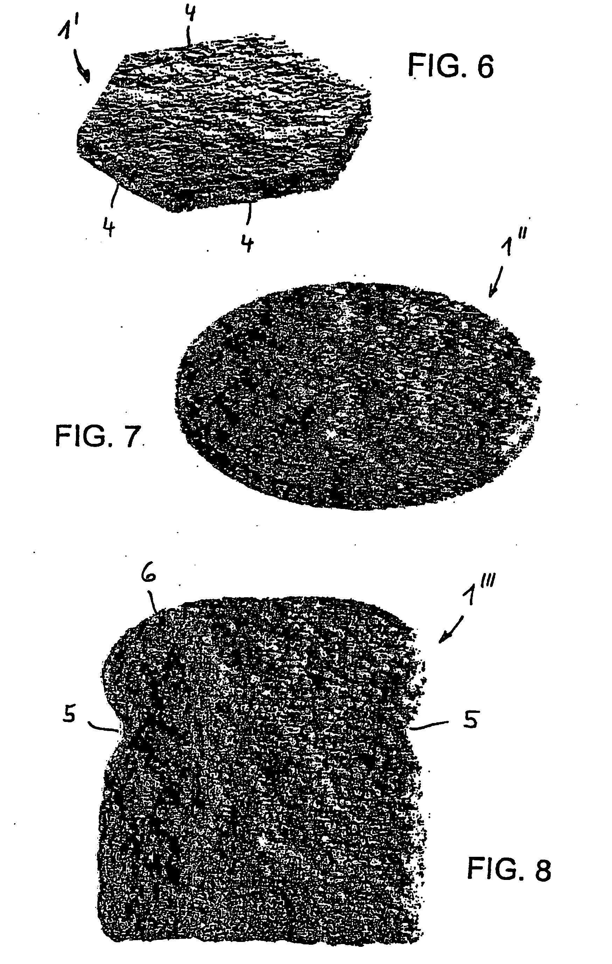

In den Figuren 6 bis 8 sind weitere bevorzugte Formate des erfindungsgemäßen Formfleischproduktes dargestellt. Das panierte, durchgegarte Formfleischprodukt 1' gemäß Fig. 6 ist polygonal ausgebildet; es besitzt sechs Ecken, wobei die die jeweilige Ecke definierenden, im Wesentlichen gleichlangen Schmalseiten 4 jeweils einen Winkel von ca. 120° bzw. 240° einschließen. Die mittlere Dicke des panierten Formfleischproduktes 1' liegt im Bereich von ca. 10 mm bis 22 mm. Der Abstand der im Wesentlichen parallel zu einander verlaufenden Schmalseiten 4 liegt im Bereich von ca. 50 mm bis 120 mm.

Anstelle eines sechseckigen Formats gemäß Fig. 6 kann das erfindungsgemäße Formfleischproduktes optional auch ein achteckiges Format aufweisen.

Das panierte, durchgegarte Formfleischprodukt 1" gemäß Fig. 7 ist im Wesentlichen kreisrund ausgebildet; sein Durchmesser liegt im Bereich von 50 mm bis 160 mm, vorzugsweise im Bereich von 100 mm bis 120 mm.

Das panierte, durchgegarte Formfleischprodukt 1''' gemäß Fig. 8 weist im Wesentlichen die Form einer klassischen Zwiebackscheibe auf. Es hat dementsprechend zwei gegenüberliegende Einbuchtungen 5 und einen bogenförmig, abgerundeten Kopfabschnitt 6. Seine Breite bzw. Höhe liegt im Bereich von 90 mm bis 160 mm; uns seine mittlere Dicke beträgt ebenfalls ca. 10 mm bis 22 mm.

Zur Zubereitung wird das erfindungsgemäße Formfleischprodukt im noch tiefgekühlten Zustand in einen herkömmlichen Toaster eingelegt bzw. gesteckt und mit maximaler Toasterheizleistung erhitzt. Die Garzeit beträgt ca. 2 x 3 Minuten. Zur Zubereitung erfindungsgemäßer Formfleischprodukte kann anstelle eines herkömmlichen Toasters gegebenenfalls auch ein aufklappbarer Sandwichtoaster genutzt werden.

## Patentansprüche

1. Verfahren zur Herstellung von paniertem Formfleisch für die Zubereitung in einem herkömmlichen Toaster, **gekennzeichnet durch** folgende Schritte:
Formen von scheibenförmigen Formfleischstücken (2) aus einer Fleischstücke, vorzugsweise Schinkenfleischstücke enthaltenden Formmasse, so dass das jeweilige Formfleischstück (2) eine mittlere Dicke im Bereich von 5 mm bis 22 mm und eine Breite oder einen Durchmesser im Bereich von 50 mm bis 160 mm aufweist,
Nasspanieren der Formfleischstücke (2) mit einer aus zerkleinerten fleischlichen Rohstoffen, Trinkwasser und Hilfsstoffen erzeugten Nasspanade (3.1), so dass das jeweilige Formfleischstück vollflächig mit der Nasspanade versehen ist,
Trockenpanieren der nasspanierten Formfleischstücke, so dass das jeweilige nasspanierte Formfleischstück (2) vollflächig mit einer Trockenpanade (3.2) beschichtet ist,
Frittieren der trockenpanierten Formfleischstücke,
Abtrennen von überschüssigem Frittierfett von den frittierten Formfleischstücken, so dass die Formfleischstücke einen Frittierfettgehalt von weniger als 12 Gew.-% aufweisen, und
Tiefkühlen der frittierten und von überschüssigem Frittierfett befreiten Formfleischstücke (2).

2. Verfahren nach Anspruch 1,
**dadurch gekennzeichnet, dass** vor dem Trockenpanieren überschüssige Nasspanade (3.1) von den nasspanierten Formfleischstücken (2) durch Abblasen mittels Luftströmung abgetrennt wird.

3. Verfahren nach Anspruch 1 oder 2,
**dadurch gekennzeichnet, dass** vor dem Frittieren überschüssige Trockenpanade (3.2) von den trockenpanierten Formfleischstücken durch Abblasen mittels Luftströmung abgetrennt wird.

4. Verfahren nach einem der Ansprüche 1 bis 3,
**dadurch gekennzeichnet, dass** zur Herstellung der Nasspanade (3.1) Kochsalz, Laktat und/oder Phospat als Hilfsstoffe verwendet werden.

5. Verfahren nach einem der Ansprüche 1 bis 4,
**dadurch gekennzeichnet, dass** die Fleischstücke vor dem Formen der Formfleischstücke (2) getumbelt werden.

6. Verfahren nach Anspruch 5,
**dadurch gekennzeichnet, dass** die Fleischstücke während des Tumbelns gekühlt werden.

7. Verfahren nach Anspruch 5 oder 6,
**dadurch gekennzeichnet, dass** die Fleischstücke nach dem Tumbeln und vor dem Formen der Formfleischstücke (2) mechanisch nachzerkleinert werden.

8. Verfahren nach einem der Ansprüche 1 bis 7,
**dadurch gekennzeichnet, dass** die fleischlichen Rohstoffe für die Nasspanade (3.1) soweit zerkleinert werden, dass sie in flüssiger Konsistenz in der Nasspanade vorliegen.

9. Verfahren nach einem der Ansprüche 1 bis 8,
**dadurch gekennzeichnet, dass** die Fleischstücke für die Formmasse so ausgewählt und die Nass- (3.1) und/oder die Trockenpanade (3.2) so zubereitet werden, dass die frittierten und von überschüssigem Frittierfett befreiten Formfleischstücke (2) einen Fettgehalt von weniger als 11 Gew.-% aufweisen.

10. Verfahren nach einem der Ansprüche 1 bis 9,
**dadurch gekennzeichnet, dass** die Nasspanade (3.1) auf tierischem Eiweiß basiert und stärkefrei ist.

## Claims

1. A method for producing breadcrumb coated shaped meat for preparation in a conventional toaster, **characterised by** the following steps:
Forming slice-like shaped pieces of meat (2) from a moulding material containing pieces of meat, preferably pieces of ham, so that the respective meat piece (2) has a mean thickness in the range from 5 mm to 22 mm and a width or a diameter in the range from 50 mm to 160 mm,
Wet-coating the shaped pieces of meat (2) with a wet coating (3.1) produced from crushed meat-type raw materials, drinking water and auxiliary materials, so that the whole surface area of the respective meat piece is provided with the wet-coating,
Dry-coating the wet-coated shaped pieces of meat, so that the whole surface area of the respective wet-coated shaped meat piece (2) is coated with a dry-coating (3.2),
Deep-frying the dry-coated shaped pieces of meat,
Separating surplus frying fat from the fried shaped meat pieces so that the frying fat content of the shaped meat pieces is less than 12 percent by weight, and
Freezing the fried shaped pieces of meat (2) from which surplus frying fat was removed.

2. A method according to claim 1, **characterised in that** prior to dry-coating surplus wet-coating material (3.1) is removed from the wet-coated shaped pieces of meat (2) by blowing it off using an air current.

3. A method according to claim 1 or claim 2, **characterised in that** prior to frying surplus dry-coating material (3.2) is removed from the dry-coated shaped pieces of meat by blowing it off using an air current.

4. A method according to any one of claims 1 to 3, **characterised in that** the wet-coating (3.1) is produced using cooking salt, lactate and/or phosphate as auxiliary materials.

5. A method according to any one of claims 1 to 4, **characterised in that** the meat pieces are tumbled prior to forming them into shaped pieces of meat (2).

6. A method according to claim 5, **characterised in that** the meat pieces are cooled during tumbling.

7. A method according to claim 5 or 6, **characterised in that** after tumbling and prior to forming them into shaped pieces of meat (2) the meat pieces are subjected to mechanical post-crushing.

8. A method according to any one of claims 1 to 7, **characterised in that** the meat-type raw materials for the wet-coating (3.1) are crushed to an extent, where they are present in the wet-coating in a liquid consistency.

9. A method according to any one of claims 1 to 8, **characterised in that** the meat pieces for the moulding material are selected in such a way, and the wet-coating (3.1) and/or the dry-coating (3.2) are prepared in such a way that the deep-fried shaped pieces of meat (2) from which the surplus frying fat has been removed have a fat content of less than 11 percent by weight.

10. A method according to any one of claims 1 to 9, **characterised in that** the wet-coating (3.1) is based on animal protein and is essentially free from starch.

## Revendications

1. Procédé de fabrication de viande reconstituée, panée, à préparer dans un grille-pain courant, **caractérisé par** les étapes suivantes:
- formage d'escalopes de viande reconstituée (2) à partir d'une masse de viande reconstituée, composée de morceaux de viande, de préférence de morceaux de viande à jambon, de sorte que chaque escalope de viande reconstituée présente une épaisseur moyenne de l'ordre de 5 mm à 22 mm et une largeur ou un diamètre de l'ordre de 50 mm à 160 mm,
- enrobage humide des escalopes de viande reconstituée (2) avec une panure humide (3.1), qui consiste en matières de boucherie brutes, triturées, d'eau de table et de substances consommables, secondaires, de sorte que chaque escalope de viande reconstituée soit recouverte sur toute sa surface de la nappe de panure humide (3.1),
- enrobage à sec des escalopes de viande reconstituée, revêtues de panure humide, de sorte que chaque escalope de viande reconstituée (2), revêtue de panure humide, soit recouverte sur toute sa surface d'une nappe de panure sèche (3.2),
- friture des escalopes de viande reconstituée, revêtues de panure sèche,
- élimination de l'excédent de graisse de friture des escalopes de viande reconstituée, frites, de sorte que la teneur en graisse de friture soit inférieure à 12 % en poids, et
- congélation des escalopes de viande reconstituée (2) frites et débarrassées de l'excédent de graisse de friture.

2. Procédé selon la revendication 1, **caractérisé en ce qu'**avant l'enrobage à sec, l'excédent de panure humide (3.1) est séparé des escalopes de viande reconstituée (2), par soufflage, au moyen d'un flux d'air.

3. Procédé selon la revendication 1 ou 2, **caractérisé en ce qu'**avant la friture, l'excédent de panure sèche (3.2) est séparé des escalopes de viande reconstituée (2), par soufflage, au moyen d'un flux d'air.

4. Procédé selon l'une des revendications 1 à 3, **caractérisé en ce que**, pour la fabrication de la panure humide (3.1), on utilise, comme matières consommables, secondaires, du sel de cuisine, du lactate et / ou du phosphate.

5. Procédé selon l'une des revendications 1 à 4, **caractérisé en ce que** les morceaux de viande sont massés.

6. Procédé selon la revendication 5, **caractérisé en ce que** les morceaux de viande sont refroidis pendant le massage.

7. Procédé selon revendication 5 ou 6, **caractérisé en ce que** les morceaux de viande sont retriturés mécaniquement après le massage et avant le formage des escalopes de viande reconstituée (2).

8. Procédé selon l'une des revendications 1 à 7, **caractérisé en ce que** les matières de boucherie brutes, utilisées pour la panure humide (3.1) sont triturées jusqu'à ce qu'elles atteignent, dans la panure humide, une consistance liquide.

9. Procédé selon l'une des revendications 1 à 8, **caractérisé en ce que** les morceaux de viande pour la masse de viande reconstituée sont choisis, et la panure humide (3.1) et / ou la panure sèche (3.1) sont préparées de sorte que les escalopes de viande reconstituée (2), fritées et débarrassées de l'excédent de graisse de friture, présentent une teneur en graisse de moins de 11% en poids.

10. Procédé selon l'une des revendications 1 à 9, **caractérisé en ce que** la panure humide (3.1) est à base de protéines animales et est exempte d'amidon.
